# EUROPEAN PATENT APPLICATION

(11) **EP 4 325 702 A1**
(43) Date of publication of application: **21.02.2024**
(21) Application number: 22190855.1
(22) Date of filing: 17.08.2022
(51) Int. Cl.: H02K 15/04

(54) **PROCESS FOR MAKING CORELESS WINDINGS**

(71) Applicant: Nortech System SA, 6828 Balerna (CH)
(72) Inventor: RIVARA, Antonio, 6828 Balerna (CH)
(74) Representative: M. Zardi & Co S.A.

(57) **Abstract**

Process for making a winding for a coreless type coil, in which the process comprises: making a flat winding (100) formed by turns of conducting wire joined by a binder, obtaining a plastically deformable winding having a closed loop configuration, elongated in a longitudinal direction (A-A); subjecting the winding to shaping, in which the winding (100) is bent thus forming a first wing (113) bent in an arc of circumference having a first curvature radius, and on the opposite side a second wing (114) bent in an arc of circumference having a second curvature radius smaller than the first one, and a stepped connection area (110) between said two wings; the shaped winding (120) thus obtained being adapted to form a portion of a coreless coil.

## Description

### Field of application

The invention relates to a process and an apparatus for making electric coils of the coreless type.

### Background art

The coreless type coils (also known as air-gap or ironless coils) are coils without the core made of ferromagnetic material and consisting of air-wound conducting wire.

Coreless coils can be used to make both rotors and stators of electric motors and, in both cases, they have interesting advantages. A coreless rotor has the advantage of a very small mass and therefore a small mechanical inertia which allows for higher accelerations and precise position control. Furthermore, the stator can be coaxially housed within a coreless rotor, creating a light and compact motor. A coreless stator, having no ferromagnetic material inside, allows to create a motor that does not suffer from known disadvantages of "cogging torque" and torque oscillation that occur, instead, in motors with a conventional stator.

The coreless coils are particularly advantageous in the field of electric micromotors, for which there is a growing demand for the ability to deliver high torques, but at the same time to have very limited dimensions and weight. High performance electric micromotors are in great demand, for instance, in the automotive sector due to countless drives found in modern cars.

The realization of coreless coils involves some challenges because there is no physical support to wind the conducting wire around and then the coil itself must be self-supporting. Arrangements of the conducting wire suitable for making the coil self-supporting are known in the art, however they involve an expensive realization. Generally a coil consists of a certain number of windings, typically one or more windings per electrical phase, and a skilled person is confronted with the problem of how to make the coil with a shape as close as possible to the ideal cylindrical shape.

### Summary of the invention

The object of the invention is to provide an advantageous process and apparatus for forming coreless coils with a shape close to the ideal cylindrical shape.

The invention provides the formation of portions of the coreless coil from closed-loop windings in which the individual wires are coated with an insulating and bonding material, so that the winding is a single body, essentially ring-shaped, which can be manipulated. These windings can be manufactured and at low cost with a planar configuration, namely with all wires lying on a plane. The invention comes from the intuition of using planar windings of this type by bending them appropriately to form the desired coil portions. An aim of the invention is that the process is precise and at the same time quick and convenient to implement.

The goal is achieved with a process according to the claim 1.

The process includes subjecting the flat winding to a shaping operation in which the winding is bent, by forming: a first portion (termed wing) on one side of the winding, said first portion being bent according to a circular arc having a first curvature radius; a second portion or second wing on the opposite side of the winding, said second portion being bent according to a circular arc having a second curvature radius smaller than said first curvature radius. A stepped connection area is also formed between said two wings, necessary to connect them given the different radius.

The so obtained shaped winding is adapted to form a portion of a coreless coil. By superimposing the wings with different curvature radii, the resulting coil is able to effectively approximate the cylindrical shape. Furthermore, the shaped windings can be superimposed so that the wires of one side of a winding overlap the central opening of the adjacent winding in order to have conducting wire substantially over the entire lateral surface of the cylindrical coil.

Preferred aspects of the process are described in the dependent claims.

A further aspect of the invention is given by a machine for making windings of a coreless coil according to the claims. The machine incorporates a station for forming conductive wire flat windings and a press for bending the windings to shape. An advantage of the machine according to the invention is to integrate in a single apparatus the necessary operations to make windings for coreless coils. In practice, the machine according to the invention is simply fed with conducting wire and delivers shaped windings ready to make the coreless coils. Another aspect is the automatic handling of the windings from the forming station to the bending station, without manual intervention, thus reducing the possibility of error.

### Description of the invention

The starting flat winding has preferably two parallel straight long sides and two curved short sides; said two short sides preferably are shaped as circular arcs. The flat winding thus formed has the shape of an elongated ring, being essentially shaped as a rectangle but having curvilinear short sides.

Said shaping step substantially bends the winding around a longitudinal axis. As a result of said bending, in a cross section (according to a section plane perpendicular to said longitudinal axis), the winding has an open-ring shape, preferably a C-shape.

In a particularly preferred embodiment, said shaping operation comprises the following two steps.

In a first step the flat winding is essentially U-shaped, in which a central portion is bent forming part of the wings with different curvature radius. The U-shape leaves two flat lateral portions extending from the partially formed wings.

In a second step, following the first one, said two flat lateral portions are also curved, completing the formation of the circular arc-shaped wings.

The two-step execution is advantageous, especially for bending the winding over an angle greater than 180 degrees, i.e. obtaining a C-section that wraps an angle greater than 180 degrees. This shape is difficult to achieve in a single step because some parts would be undercut parts.

The shaping step is preferably performed with a press comprising a die and a punch wherein the die and the punch have mating surfaces for shaping the winding.

In a preferred embodiment, the press comprises a stand for the flat winding, for example a support adapted to engage the central opening of the winding. Said stand is positioned in front of a die-receiving seat and in front of the punch, that is along the engagement direction between the die and the punch. Preferably, said stand is configured to retract backwards during engagement between the punch and the die, to allow the winding reaching the die seat.

The described two-step shaping is preferably carried out as follows.

The first step is performed by the punch that engages the die from the front, in which the wings are partially formed by the cooperation between the mating surfaces of the punch (for example, of a suitable punch head itself) and the die, and the lateral portions of the winding are not substantially bent and remain protruding outside the die and toward the sides of the punch;
the second step is performed by a pair of lateral jaws that push the lateral portions of the winding against the lateral surface of the punch, completing the bending and formation of the wings.

The die-receiving seat and the punch head are sized to act substantially only on the central portion of the winding. The lateral portions remain substantially undeformed during the first step. It should be noted that during the second step, the punch remains in the position of engagement with the die, reached at the end of the first step.

The stepped connection area between the two arched portions in the shaped winding is preferably flat.

The coil obtained with the process of the invention can be a single-phase or multiphase coil and can be intended for a rotor or more preferably for a stator of an electric motor. Preferably the windings are three in number, or multiple of three, and the coil consequently is a three-phase coil.

According to the invention, a machine for making windings for a coreless coil can comprise:
a winding station configured to form windings shaped as a planar closed loop starting from a conducting wire, preferably by means of a rotating mandrel winding system;
a press adapted to shape the windings obtained in said winding station;
a translatory system adapted to extract single windings from the winding station and transfer the windings to the press;
in which the press includes a die, a support for a flat winding delivered by the translatory system, a punch with a shaped head mating a die seat, in which the punch head and the die seat are configured to deform the winding thus forming on one side of the winding a first wing bent in a circular arc having a first curvature radius, on the opposite side a second wing bent in a circular arc having a second curvature radius smaller than the first one, and a connection area between said two portions with different radii.

The translatory system is automatically controlled by a machine control system. At the end of the forming, the planar winding is automatically transferred to the bending press.

Preferably, the press further comprises a pair of lateral jaws arranged to tighten the right and left lateral portions of the winding against the lateral surface of the punch when the punch is in the position of engagement with the die and the winding is located between the same punch and die.

### Description of the figures

The features and advantages of the invention will become clearer with the description of a preferred embodiment, illustrated in the figures.
Fig. 1 shows a conducting wire flat winding usable for the implementation of the present invention.
Fig. 2 shows a lateral view of the winding of Fig. 1.
Fig. 3 shows the winding of Fig. 1 during a bending step.
Fig. 4 shows the winding of Fig. 1 during a further bending step which follows the step of Fig. 3.
Fig. 5 shows a machine according to a way of carrying out the invention.
Fig. 6 is a detail of Fig. 5.
Figs. 7 and 8 show details of the machine of Fig. 5 during different processing steps.
Figs. 9 to 11 exemplify the operation of the winding-bending press of the machine of Fig. 5.
Figs. 12 and 13 show in a simplified way the position of shaped windings in a coil.

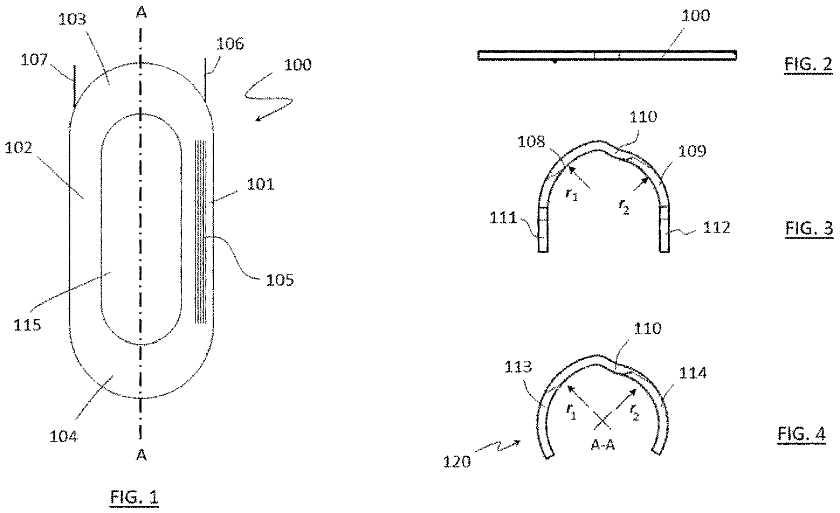

Fig. 1 shows a winding 100 in the form of an elongated closed loop, essentially rectangular in shape with two curved sides comprising straight and parallel long sides 101, 102 and sides 103, 104 curved according to a circular arc. The winding 100 is formed by a multitude of turns of conducting wire 105 that are exemplified in side 101 and has two ends 106, 107 of the wire representing the electrical connections of the winding. Given the closed loop shape, the winding has a central opening 115.

The conducting wire 105 for example is a copper wire covered with an insulator and a lacquer; the coating, at a sufficiently high temperature, forms a binding matrix around the various wires so that the winding 100 is a single body that can be manipulated and plastically deformed, for example bent. Given the elongated shape, a longitudinal axis A-A of the winding 100 can be identified.

Fig. 2 shows that the winding 100 is planar, i.e. the wires 105 lie on the same plane.

Figs. 3 and 4 show a shaping of the winding in two steps. In the first step, the central part of the winding is bent partially forming a wing 108 bent into an arc of a circle with a curvature radius ***r₁*** and on the opposite side a wing 109 also bent in an arc of circle but with a different curvature radius ***r₂***, where ***r₂*** is smaller than ***r₁***. Said two wings 108 and 109 are connected by a stepped portion 110. The wings 108 and 109 are on opposite sides of a longitudinal median line (parallel to axis A-A of Fig. 1).

The bending of Fig. 3 gives the winding 100 an essentially U-shaped section which has flat lateral portions 111, 112. Said portions 111 and 112 are defined as flat since they are not curved in this first step. The lateral portions 111 and 112 extend from wings 108 and 109 respectively.

Fig. 4 represents a further step in which the portions 111 and 112 are also bent each with a curvature radius equivalent to the respective wing 108 or 109 so as to be continuously connected. The portion 111 connects to the wing 108 and the portion 112 connects to the wing 109. The so obtained shaped winding 120 substantially comprises two wings 113, 114 having different curvature radius respectively, ***r₁*** and ***r₂***, and the connecting portion 110.

In the bent winding 120 of Fig. 4, the wing 113 lies on a larger radius/diameter than the wing 114 with respect to the axis A-A; in other words, the wing 113 is more external than the wing 114. As can be seen in Fig. 4, the winding 120 has a C-section with a transition "knee" between the two wings 113, 114 with different radii. In Fig. 4 the axis A-A of Fig. 1 is indicated (said axis A-A is perpendicular to the plane of Figs. 3 and 4).

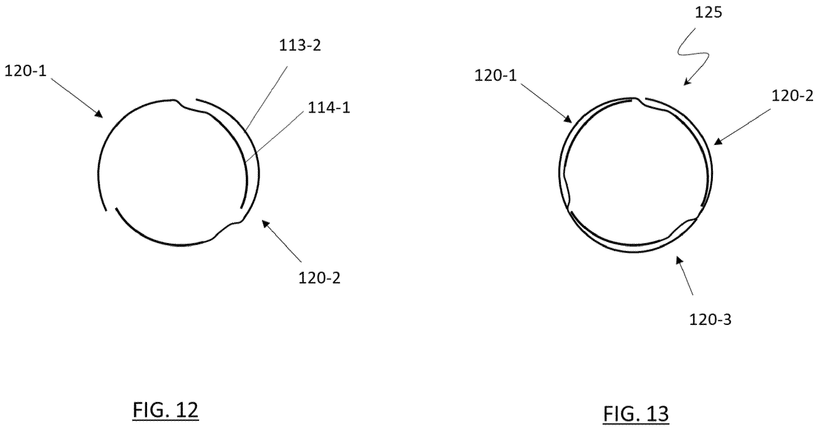

The C-bent winding of Fig. 4 represents a portion of a coreless coil. The coil can be obtained by assembling several windings, for example three windings identical to the winding 100, after having shaped them as in Fig. 4, such that the outer wing 113 of each winding overlaps the inner wing 114 of an adjacent winding, obtaining an essentially cylindrical body with axis A-A. This procedure is exemplified in Figs. 12 and 13.

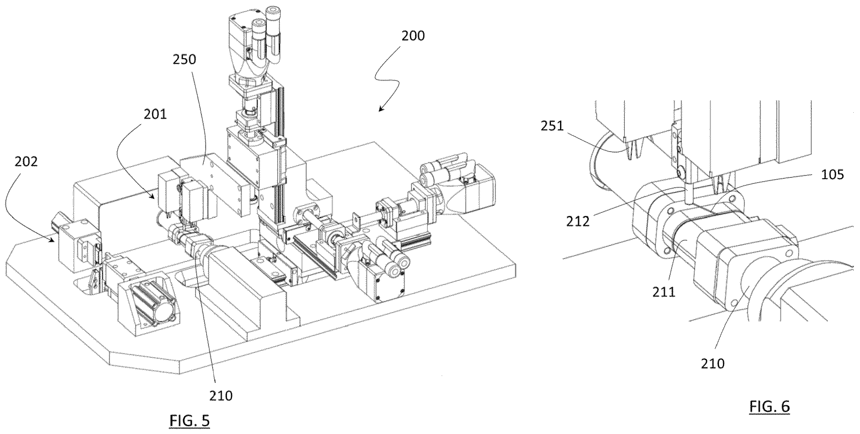

Figs. 5-8 show a machine 200 for implementing the process of the invention and making windings of the type illustrated in Figs. 1-4.

Said machine 200 essentially comprises a winding station 201 and a shaping station 202.

The winding station 201 is adapted to wind the conducting wire to form a flat winding as in Fig. 1. The station 201 operates with a rotating mandrel 210 by winding the conducting wire 105 around a core 211 which serves to give to the winding the desired shape.

The wire 105 is dispensed from a nozzle 212. It should be noted that said nozzle 212 is part of a head 250 movable on three axes to suitably position the wire during the production steps. Said head also carries blades 251 for cutting the thread at the end of the winding step.

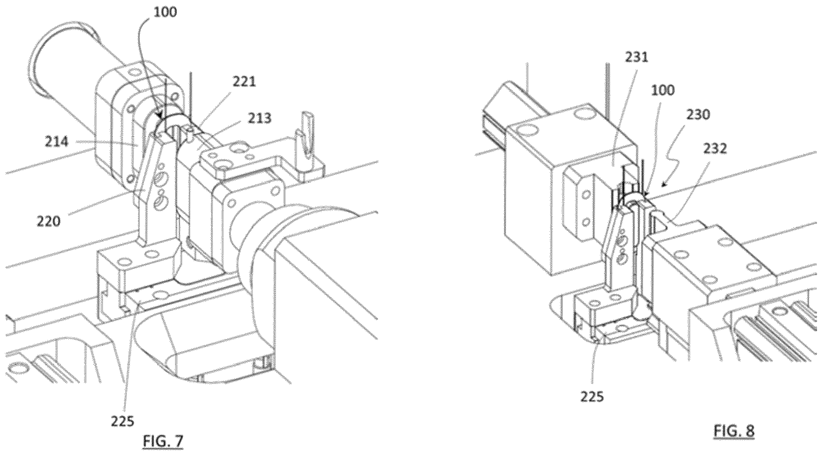

The core 211 of the mandrel 210 is axially modular to allow extraction of the winding 100 once completed. Fig. 7 shows the condition in which the core 211 is open (axially separating the portions 213 and 214) and is rotated by 90° with respect to Fig. 6, so that the winding 100 is vertically oriented. The winding 100 (after cutting the wire) is picked up by two gripping members 220, 221 able to grab the long sides 101, 102 of the winding itself. Such gripping members 220, 221 are for example with pneumatic opening/closing.

The gripping members 220, 221 are mounted on a slide 225 that allows to transfer the flat winding 100 to the station 202, more particularly to a press 230 which is shown in Fig. 8. Said press 230 comprises a die 231 and a punch 232 and substantially performs the bending and shaping process that has been exemplified in Figs. 3 and 4.

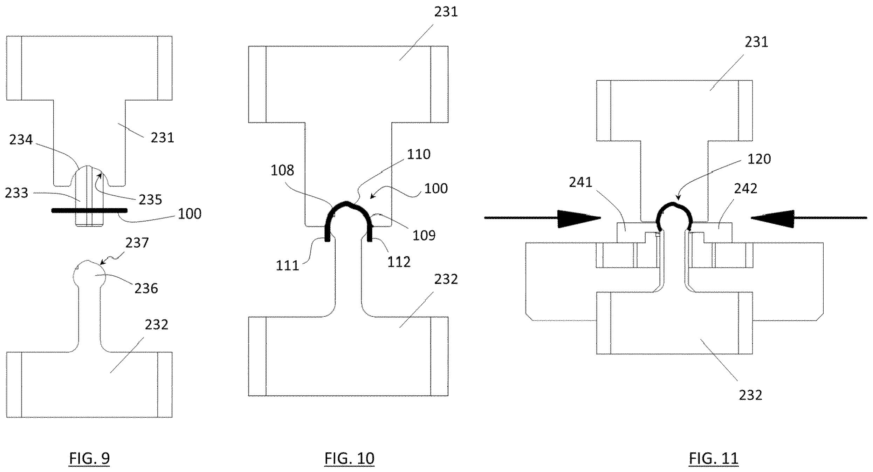

Further features and operating steps of the press 230 are shown in Figs. 9-11.

The winding 100 is supported by a stand stud 233 that engages the central opening 115 of the winding. The stand 233, for example, exits pneumatically from the body of the die 231.

The die 231 has a seat 234 with a concave surface 235 suitably shaped to obtain the desired bending of the winding; The punch 232 has a head 236 with a convex surface 237 that is mated to the concave surface 235. In particular, both the surface 235 and the surface 237 have cylindrical portions having different curvature radii and a connecting step adapted to form the portion 110 of Fig. 3.

To form the connecting portion 110, the surfaces 235 and 237 have for example a suitable step and a corresponding recess.

Fig. 10 shows the phase in which the punch 232 engages the seat 234 and the winding is bent between surfaces 237 and 235. It can be seen in said Fig. 10 that the portions 111 and 112 remain outside the seat 234 at the sides of the head 236 of the punch.

Fig. 11 shows the further bending of said portions 111 and 112 by two lateral jaws 241, 242 that push said two portions against the lateral surface of the head 236 completing the formation of the wings 113, 114 described above. The winding thus bent can be axially extracted. This is how it is obtained the winding as shown in Fig. 4 representing a part of a coreless coil, for example a stator of an electric micromotor.

Figs. 12 and 13 schematically show the overlap of shaped windings 120 identical to each other, of the type of Fig. 4, in order to form a three-phase coil 125. The three windings are indicated with symbols 120-1, 120-2 and 120-3. Fig. 12 shows that the winding 120-2 overlaps the winding 120-1 so that the larger diameter wing 113-2 of the second winding overlaps the smaller diameter wing 114-1 of the first winding. The distance between the windings is exaggerated in the figures for ease of understanding. Fig. 13 shows in a simplified way the position of the three windings in a coreless coil 125, which is substantially cylindrical. It is noted that the wing with the greatest curvature radius of each winding overlaps the wing of the consecutive winding with smaller curvature radius.

## Claims

1. Process for making a winding for a coreless type coil, the process comprising:
making a flat winding (100) formed by turns of conducting wire joined by a binder, obtaining a winding that, as a whole, is a plastically deformable rigid body, said winding having a closed loop configuration and having an elongated shape in a longitudinal direction (A-A);
subjecting the winding to a shaping operation in which the winding (100) is bent forming on one side of the winding a first wing (113) bent in a circular arc having a first curvature radius, and forming on the opposite side of the winding a second wing (114) bent in a circular arc having a second curvature radius smaller than said first curvature radius, and further forming a stepped connection area (110) between said first wing and said second wing;
the shaped winding (120) thus obtained being adapted to form a portion of a coreless coil.

2. Process according to claim 1, wherein the shaping operation is performed in a press (200) comprising a die (231) and a punch (232) adapted to engage the die, wherein the punch and the die have mating surfaces (235, 237) to shape the winding.

3. Process according to claim 2, wherein the press (200) includes a stand (233) for the flat winding, said stand is adapted to engage a central opening (115) of the winding (100); said stand (233) is positioned in front of a seat (234) of the die (231) intended to accommodate the winding and said stand (233) is positioned in front of the punch (232); said seat has a concave surface mating with a convex surface of the punch; said stand is configured to retract during engagement between punch and die so as to allow the winding to reach the seat.

4. Process according to one of the preceding claims, wherein the shaping operation comprises the following two steps:
a first step during which the flat winding is shaped essentially in a U-shape, partially forming said first wing and said second wing bent in a circular arc, and further forming the connection area, in which the winding at the end of said first step comprises undeformed flat lateral portions (111, 112) extending from the partially formed wings, and
a second step, successive to the first one, in which said flat lateral portions (111, 112) are bent, completing the formation of said wings.

5. Process according to claim 4, wherein the shaping is performed in a press (230) and in which:
the first step is performed by a punch (232) that frontally engages a die (232), and the wings are partially formed by the interaction between respective mating surfaces (235, 237) of the punch and the die, and wherein the flat lateral portions (111, 112), at the end of said first step, are found protruding from the die and on the sides of the punch;
the second step is performed by a pair of lateral jaws (241, 242) that tighten the flat lateral portions (111, 112) against the lateral surface (237) of the punch, bending said lateral portions so as to complete the formation of the wings, wherein during said second step the punch remains in the position of engagement with the die, reached at the end of the first step.

6. Process according to the claim 5, performed in a press in accordance with claims 3 or 4.

7. Process according to one of the preceding claims, wherein the winding is bent around a longitudinal bending axis by an angle equal to or greater than 180 degrees.

8. Process according to one of the preceding claims, wherein said connection area (110), which is between the two arc-bent wings, is flat or has at least one flat portion.

9. Process according to one of the preceding claims, wherein the flat winding (100), before shaping, has an elongated ring-shape having two parallel straight long sides (101, 102) and two curvilinear short sides (103, 104) that are preferably shaped as circular arcs.

10. Process for making a coreless coil (125) without a core and essentially cylindrical in shape, the process comprising:
arranging a plurality of shaped windings (120) with the process of one of claims 1-9;
assembling the coil by juxtaposing and partially overlapping the windings thus shaped, so as to form said essentially cylindrical coil, wherein the shaped windings (120) are overlapped so that the first wing having greater curvature radius (113) of each winding overlaps the wing of the adjacent winding having smaller curvature radius (114).

11. Process according to claim 10, wherein the windings used to make a coil are three in number, or multiple of three, and the coil is consequently adapted to operate as three-phase coil.

12. Process according to claim 10 or 11, wherein said coil is a stator or rotor coil for electric micromotors.

13. Machine for making windings for a coreless coil comprising:
a winding station (201) configured to form windings shaped as a planar closed loop from a conducting wire, preferably by means of a rotating mandrel winding system;
a press (230) adapted to shape the windings obtained in said winding station (201);
a translatory system adapted to extract single windings from the winding station and transfer the windings to the press;
wherein the press includes a die (231), a stand (233) for a flat winding delivered by the translatory system, a punch (232) with a shaped head mating a die seat, in which the punch head and the die seat are configured to deform the winding thus forming on one side of the winding a first wing (108) bent in a circular arc having a first curvature radius, on the opposite side a second wing (109) bent in a circular arc having a second curvature radius smaller than the first one, and a connection area (110) between said two wings (108, 109).

14. Machine according to claim 13, wherein the press further comprises a pair of lateral jaws (241, 242) arranged to tighten the right and left lateral portions (111, 112) of the winding against the lateral surface of the punch, when the punch is in engagement position with the die and the winding is located between the same punch and die.
